(19) Europäisches Patentamt
European Patent Office
Office européen des brevets

(11) **EP 2 247 463 B1**

(12) **EUROPÄISCHE PATENTSCHRIFT**

(45) Veröffentlichungstag und Bekanntmachung des Hinweises auf die Patenterteilung:
**03.07.2013 Patentblatt 2013/27**

(21) Anmeldenummer: **08872844.9**

(22) Anmeldetag: **25.11.2008**

(51) Int Cl.:
**B60K 17/356** (2006.01)

(86) Internationale Anmeldenummer:
**PCT/EP2008/066113**

(87) Internationale Veröffentlichungsnummer:
**WO 2009/106169 (03.09.2009 Gazette 2009/36)**

(54) **VERFAHREN ZUM ERMITTELN EINER RADREFERENZDREHZAHL EINES RADES AN EINEM FAHRZEUG MIT HYDROSTATISCHEM ANTRIEB UND VORRICHTUNG ZUM ERMITTELN EINER RADREFERENZDREHZAHL EINES RADES EINES FAHRZEUGS MIT HYDROSTATISCHEM ANTRIEB**

METHOD FOR DETERMINING A WHEEL REFERENCE SPEED OF A WHEEL ON A VEHICLE HAVING HYDROSTATIC DRIVE, AND DEVICE FOR DETERMINING A WHEEL REFERENCE SPEED OF A WHEEL OF A VEHICLE HAVING HYDROSTATIC DRIVE

PROCEDE POUR DETERMINER UNE VITESSE DE ROTATION DE REFERENCE D'UNE ROUE D'UN VEHICULE A ENTRAINEMENT HYDROSTATIQUE, ET DISPOSITIF POUR DETERMINER UNE VITESSE DE ROTATION DE REFERENCE D'UNE ROUE D'UN VEHICULE A ENTRAINEMENT HYDROSTATIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.02.2008 DE 102008011941**

(43) Veröffentlichungstag der Anmeldung:
**10.11.2010 Patentblatt 2010/45**

(73) Patentinhaber: **Robert Bosch GmbH
70442 Stuttgart (DE)**

(72) Erfinder: **GREPL, Martin
71679 Asperg (DE)**

(56) Entgegenhaltungen:
**EP-A- 1 716 737     DE-A1- 19 918 882
FR-A- 2 651 729**

EP 2 247 463 B1

**Beschreibung**

Stand der Technik

Die Erfindung betrifft ein Verfahren zum Ermitteln einer Radreferenzdrehzahl eines Rades eines Fahrzeuges mit einem ein Übertragungsmedium benutzenden hydrostatischen Antrieb, wobei der hydrostatische Antrieb zumindest auf das eine Rad wirkt, wobei der hydrostatische Antrieb einen in einen Pumpbetrieb verschwenkbaren Schwenkmotor aufweist, mit dem ein Drehmoment auf das Rad aufbringbar ist, und wobei ein Raddrehzahlsensor zur Erfassung der jeweiligen Raddrehzahl radnah angeordnet ist.

Beim Einsatz von Fahrdynamikregelsystemen in Kraftfahrzeugen und mobilen Arbeitsmaschinen ist der Reifenschlupf, der auch mit $\lambda$ bezeichnet wird, eine zentrale und wichtige Zustandsgröße. Diese Zustandsgröße wird zur Schlupfregelung im Rahmen von ABS-Systemen, also Antiblockiersystemen und ASR-Systemen, also Antriebsschlupfregelungen benötigt. In solchen Systemen und Regelungsarten besteht die Regelungsaufgabe darin, eine Absolutdifferenz zwischen einem am jeweiligen Rad wirkenden Ist-Schlupf und einem gewünschten Soll-Schlupf zu minimieren. Dabei wird der Soll-Schlupf in einem entsprechenden Regler berechnet. Wird ausschließlich ein ABS-System verwendet, so ist auch die Verwendung eines sog. Instabilitätsreglers möglich.

Auch wird im Rahmen von verbreitet vorhandenen ESP-Systemen, also Elektronischen Stabilitätsprogrammen, dieser Reifenschlupf als Regelgröße verwendet. Ein Fahrzeugregler in elektronischem Stabilitätsprogramm greift dabei auf einen unterlagerten ABS- und/ oder ASR-Schlupfregler zurück.

Der Reifenschlupf $\lambda$ berechnet sich aus der frei laufenden Radgeschwindigkeit $v_{frei}$ und der tatsächlichen Radgeschwindigkeit $v_{ist}$ nach der Formel:

$$\lambda = \frac{(v_{frei} - v_{ist})}{v_{frei}}.$$

Die tatsächliche Radgeschwindigkeit $v_{ist}$ lässt sich aus dem Radradius r und der tatsächlichen Raddrehzahl $\Omega_{ist}$ berechnen. Diese Berechnung erfolgt gemäß der Formel $v_{ist} = r \cdot \Omega_{ist}$.

Die frei laufende Radgeschwindigkeit $v_{frei}$ ist unter Verwendung einer frei laufenden Raddrehzahl $\Omega_{frei}$ und dem Radradius gemäß $v_{frei} = r \cdot \Omega_{frei}$ ermittelbar.

Unter der frei laufenden Raddrehzahl wird die Drehzahl verstanden, die ein Rad, ohne gebremst oder beschleunigt zu werden, allein durch das Abrollen auf einer Unterlage einnimmt.

In der Literatur wird die frei laufende Raddrehzahl $\Omega_{frei}$ auch häufig als Radreferenzdrehzahl bezeichnet.

Genau diese Radreferenzdrehzahl oder frei laufende Raddrehzahl $\Omega_{frei}$, wird jedoch letztendlich bei der zum Reifenschlupf führenden Berechnung

$$\lambda = \frac{r \cdot \Omega_{frei} - (r \cdot \Omega_{ist})}{r \cdot \Omega_{frei}} \quad \text{benötigt. Nach Umfor-}$$

mung der Gleichung ist $\lambda$ gemäß folgender Formel zu berechnen:

$$\lambda = 1 - \left( \frac{\Omega_{ist}}{\Omega_{frei}} \right).$$

Die im Bewegungsfall, also sowohl beim Abbremsen des Rades als auch beim Beschleunigen des Rades, vorliegende Ist-Raddrehzahl wird durch Raddrehzahlsensoren, die an jedem Rad vorhanden sind, gemessen. Ist das Rad unbeschleunigt, oder ungebremst, so läuft das Rad frei, in dem Sinne, dass es auf dem Untergrund frei abrollt, wodurch die Raddrehzahlsensoren zur Bestimmung der frei laufenden Raddrehzahl nutzbar sind.

Läuft das Rad frei, rollt also frei ab, so ist $\Omega_{ist}$ gleich groß wie $\Omega_{frei}$. Durch Nutzung des Wertes $\Omega_{ist}$ beim frei rollenden Rad, lässt sich über eine Multiplikation mit dem Radradius die frei laufende Radgeschwindigkeit $v_{frei}$ ermitteln. Dies ist deswegen möglich, da beim frei abrollenden Rad der Schlupf gleich Null ist.

In einem Beschleunigungs- oder Bremsfall des Fahrzeuges, ist jedoch häufig eines oder mehrere der vorhandenen Räder im Schlupf befindlich, rutscht also ganz oder teilweise durch. Um dabei die frei laufende Raddrehzahl ermitteln zu können, muss dann auf andere Verfahren zugegriffen werden. Bei mobilen Arbeitsmaschinen, aber auch in anderen Kraftfahrzeugen, sind hydrostatische Antriebe weit verbreitet. Diese hydrostatischen Antriebe arbeiten mit Übertragungsmedien zum Weitergeben kinetischer Energie. Dabei werden im Regelfall Mineralöle, jedoch in zunehmendem Maße auch umweltverträgliche Flüssigkeiten, wie Wasser oder spezielle Ester oder Glykole verwendet. Hydrostatische Antriebe weisen den Vorteil auf, dass sie energetisch nahezu eine optimale Getriebeart ermöglichen, da eine stufenlose Verstellung der abtriebsseitigen Geschwindigkeit möglich ist.

Aus der DE 199 18 882 A1, ist ein Verfahren und eine Vorrichtung zur Bereitstellung eines Steuerunterstützungs- und Antriebsschlupfsystems für hydrostatisch getriebene Fahrzeuge bekannt. Diese Druckschrift offenbart ein hydraulisch angetriebenes Fahrzeug mit einem Vorderräderpaar und einem Hinterräderpaar. An jedem Rad greift ein Schwenkmotor an, der so verstellbar ist, dass er in einen Pumpbetrieb verschwenkbar ist. Während der Schwenkmotor aktiv das jeweilige Rad beschleunigt, bremst der Schwenkmotor nach Umschaltung in den Pumpbetrieb das jeweilige Rad entsprechend ab. Mittels radnah angebrachten Raddrehzahlsensoren wird die Drehzahl des Rades ermittelt.

Wie auch in der DE 199 18 882 A1 offenbart, wird bei hydrostatischen Fahrantrieben entweder ausschließlich oder teilweise mit den Schwenkmotoren, die auch als Verstellmotoren bezeichnet werden, gebremst, indem die Schwenkmotoren als Pumpe fungieren und sich auf den Öldruck, der sich durch das Antreiben der Pumpe und einem angeschlossenen Verbrennungsmotor aufbaut, abstemmen.

Um die Bremswirkung zu verstärken, ist die Verwendung von Fremdkraftbremsen, z. B. mechanischen Betriebs-/Feststellbremsen verbreitet.

Zur Ermittlung der Referenzdrehzahl und/oder der frei laufenden Radgeschwindigkeit, wird herkömmlich über eine Mittelwertbildung der einzelnen Signale der Raddrehzahlsensoren, die arithmetisch oder gewichtet vorgenommen wird, eine Schätzung durchgeführt. Diese Schätzung wird dann noch über ein korrigierendes "Fahrzeugmodell" optimiert. Dieses Fahrzeugmodell trägt z. B. dem Lenkwinkel und der jeweiligen Beschleunigung oder Abbremsung des Fahrzeuges Rechnung. So werden die jeweils gemessenen Minima und Maxima an $\Omega_{ist}$ aller Räder, z. B. aller vier Räder ermittelt. Je nach Brems- oder Antriebsregelung, werden die Minima oder Maxima ausgewählt und mittels Medianbildung oder Mittelwertbildung miteinander verrechnet. Stützmodelle, die dem Untergrund, z. B. Asphalt oder Eis Rechnung tragen, werden dann hinzugezogen.

Beim Beschleunigen wird die Drehzahl durch eine Maximumbildung begrenzt, d. h. der maximal möglichen Beschleunigung. Beim Abbremsen wird die Drehzahl durch eine Minimumbildung begrenzt, d. h. der maximal möglichen Verzögerung.

Wenn sich allerdings alle vier Räder bzw. einzelne Räder deutlich im Schlupf befinden, liefert diese herkömmliche Methode einen fehlerhaften Wert für $\Omega_{frei}$. Das Fahrzeug wird dann zwangsläufig unter- oder überbremst. Die Handhabbarkeit des Fahrzeuges wird beim Überholen verringert, was unter Umständen sogar zu Unfällen führt.

Offenbarung der Erfindung

Die Aufgabe der Erfindung wird dadurch gelöst, dass während der Raddrehzahlsensor die Radreferenzdrehzahl ermittelt, der Schwenkmotor zum Ermöglichen eines widerstandsfreien Flusses des Übertragungsmediums durch den Schwenkmotor hindurch entsprechend verstellt wird.

Vorteile der Erfindung

Dadurch wird eine genauere und sich korrigierende Bestimmung der jeweiligen Radreferenzdrehzahl ermöglicht, das zu einer genaueren Ermittlung des Radschlupfes führt. Vor allem bei Bremsvorgängen, in denen alle Räder Schlupf aufweisen, ist eine Korrektur durch Erzielung einer Anpassungsphase durch das Umschalten des Schwenkmotors in einen widerstandsfreien Durchflusszustand von Vorteil, um ein Driften des geschätzten Schlupfes zu vermeiden.

Die Aufgabe wird auch durch eine Vorrichtung gelöst, enthaltend Mittel die zum Durchführen des erfindungsgemäßen Verfahrens ausgestaltet sind, wie einem entsprechenden Hydraulikantriebssteuergerät.

Eine solche Vorrichtung weist den Vorteil auf, dass sie auch nachgerüstet werden kann, und in Fahrzeugen mit hydrostatischem Antrieb, wie in mobilen Arbeitsmaschinen, also z. B. Feldspritzen, Baggern, Raupen oder Ähnlichem zu einer besseren Regelung des fahrdynamischen Verhaltens führt.

In dieser Erfindung sind unter dem Begriff Rad jegliche die Fortbewegung ermöglichende Vorrichtungen verstanden, die auf dem Untergrund abrollen. Das beinhaltet insbesondere auch Ketten, Reifen und Rollen.

Vorteilhafte Ausgestaltungen werden in den Unteransprüchen näher beansprucht und nachfolgend näher erläutert.

So ist es besonders vorteilhaft, wenn der Schwenkmotor bereits bevor der Raddrehzahlsensor die Radreferenzdrehzahl ermittelt, so verstellt wird, dass der Durchfluss an ein Übertragungsmedium widerstandsfrei durch diesen hindurch erfolgt. Es ist dabei gewährleistet, dass das Rad frei abrollt, während der Raddrehzahlsensor die Radreferenzdrehzahl ermittelt, also die Trägheitseffekte des Rades ausgeglichen sind. Dreht das Rad vor Umschalten des Schwenkmotors auf widerstandsfreien Durchfluss auf dem Untergrund durch, so kann sich das Rad dann wieder so verlangsamen, dass es lediglich noch abrollt, während es im Falle, dass es vorher blockiert hatte, beim Umschalten des Schwenkmotors auf freien Durchfluss wieder auf normale Abrollgeschwindigkeit beschleunigt ist.

Da das größte Bremsmoment auf die Vorderräder übertragen wird, ist es von Vorteil, wenn im Bremsfall an den Hinterrädern die Radreferenzdrehzahl ermittelt wird. Die Vorderräder sind die relativ zur Fahrtrichtung gesehen vorderen Räder, wobei die Hinterräder die relativ zur Fahrtrichtung des Fahrzeugs gesehen hinteren Räder sind. Die Messung lässt sich dann besonders sicher für die Insassen oder den Führer des Fahrzeuges durchführen, wenn zumindest jeweils zwei Vorderräder und zwei Hinterräder über jeweils einen Schwenkmotor hydrostatisch angetrieben werden und die auf die Hinterräder und/oder Vorderräder einwirkenden Schwenkmotoren zum Ermöglichen eines widerstandsfreien Durchflusses an Übertragungsmedium durch den jeweiligen Schwenkmotor hindurch während des Ermittelns der Radreferenzdrehzahl verstellt werden.

Im Beschleunigungsfall sollte die Radreferenzdrehzahl an den Vorderrädern, in Fahrtrichtung gesehen, ermittelt werden.

Wenn an den auf die Hinterräder bzw. bei Beschleunigung die Vorderräder einwirkenden Schwenkmotoren abwechselnd der Durchfluss an Übertragungsmedium durch diese hindurch widerstandsfrei gestaltet wird und dabei jeweils abwechselnd die jeweilige Radreferenzdrehzahl erfasst wird, so verlängert sich im Abbremsungsfall nur unwesentlich der Bremsweg und im Beschleunigungsfall dauert es unwesentlich länger, bis die gewünschte Endbeschleunigungsgeschwindigkeit erreicht ist. Dabei bleibt das Fahrzeug gut kontrollierbar, wodurch ein Ausbrechen des Fahrzeuges und Gefährden des Fahrzeugführers oder Dritter vermieden wird.

Um trägheitsbedingte Zeitverzüge zu verhindern, ist es von Vorteil, wenn beim Verstellen des Schwenkmotors zum Ermöglichen eines widerstandsfreien Durchflusses an Übertragungsmedium durch den Schwenkmotor die Drehzahl des mit diesem Schwenkmotor im Wirkzusammenhang stehenden Rades erhöht wird. Wird der Schwenkmotor auf widerstandsfreien Durchfluss verschwenkt, also auf Null geschwenkt, so bleibt der Volumenstrom konstant. Während das Drehmoment sich beim Annähern des Nullpunktes weiter verringert, erhöht sich dadurch allerdings kurzzeitig die Drehzahl, da das Schluckvolumen des Schwenkmotors immer weiter verringert wird. Wenn eine Fremdkraftbremse aktiv das beim Verstellen das mit dem im Wirkzusammenhang stehenden Schwenkmotors beschleunigte Rad abbremst, so wird übermäßiges Beschleunigen vermieden, wodurch das Fahrzeug relativ ausfallsicher wird.

Um den Betriebsdruck für den hydraulischen Antrieb, also das gesamte Leitungssystem zur Verfügung zu stellen, ist es von Vorteil, wenn der Betriebsdruck über eine Hauptpumpe, die vorzugsweise mit einem Verbrennungsmotor verbunden ist, zur Verfügung gestellt wird. Die Verbindung einer Hauptpumpe mit einem Verbrennungsmotor, ist besonders effizient und bei unterschiedlichsten Bedingungen verwendbar. Die Vielseitigkeit eines solchen Verfahrens, und die Vielseitigkeit der Verwendung eines mit diesem Verfahren ausgestatteten Fahrzeugs werden deutlich erhöht.

Die Handhabbarkeit wird auch verbessert, wenn ein Steuergerät auf die Vorsteuergeräte der Schwenkmotoren und ein Vorsteuergerät der Hauptpumpe steuernd oder regelnd zugreift.

Kurze Beschreibung der Zeichnungen

Die Erfindung wird mit Hilfe einer Zeichnung nachfolgend näher beschrieben. Die darin enthaltenen Figuren zeigen:

Figur 1    eine schematische Darstellung eines Schaltplanes eines Fahrzeuges mit hydrostatischem Einzelradantrieb, in dem das Verfahren gemäß der Erfindung angewendet wird und

Figur 2    ein schematisches Ablaufdiagramm für das erfindungsgemäße Verfahren.

Ausführungsformen der Erfindung

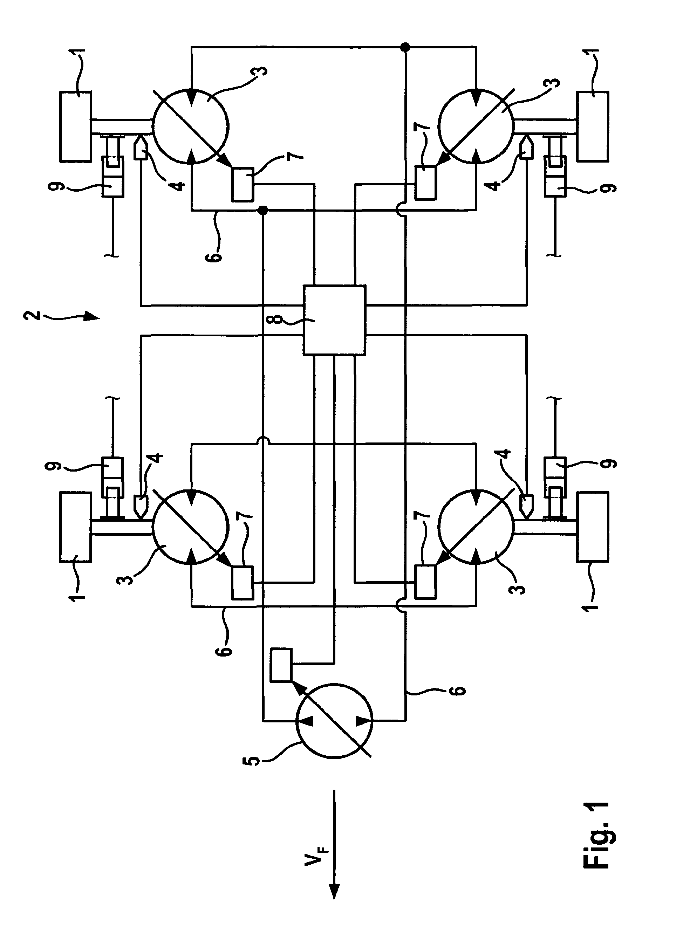

Figur 1 zeigt vier Räder, die mit dem Bezugszeichen 1 bezeichnet werden und in einem Fahrzeug 2 mit hydrostatischem Antrieb verbaut sind.

Die Räder 1 werden über jeweils einen Schwenkmotor 3 angetrieben. Unter Schwenkmotor werden Verschwenkmotoren oder Verstellmotoren bezeichnet, die so für eine kurze Zeit abwechselnd auf Null schwenkbar sind, dass sie dem durch sie fließenden Übertragungsmedium, wie z. B. Mineralöl, keinen Widerstand bieten. Sie werden somit förmlich vom Volumenstrom abgeschnitten, wirken dann weder als Motor noch als Pumpe, was dazu führt, dass das jeweilige Rad frei läuft.

Über Raddrehzahlsensoren 4, die an jedem Rad angebracht sind, oder zumindest radnah angebracht sind, lassen sich die jeweiligen Raddrehzahlen ermitteln. Fährt das Fahrzeug 2 mit konstanter Geschwindigkeit in Richtung des Pfeiles $V_F$, so stellt eine Hauptpumpe 5, die mit einem nicht dargestellten Verbrennungsmotor verbunden ist, den notwendigen Druck des Hydrauliksystems zur Verfügung.

Die Hauptpumpe 5 gibt den Druck an das Übertragungsmedium weiter, was wiederum den Druck durch entsprechende Leitungen zu den Schwenkmotoren leitet. Die Schwenkmotoren 3 treiben dann die Räder 1 an. Soll das Fahrzeug beschleunigt werden, so überträgt die Hauptpumpe 5 durch die Leitungen 6 mehr Druck in die Schwenkmotoren 3, was dann zu einer schnelleren Drehung der Räder 1 führt.

Die Raddrehzahlsensoren liefern Werte für die jeweilige tatsächliche Raddrehzahl $\Omega_{ist}$.

In einer entsprechenden Berechnungseinheit, wie etwa einer CPU, wird die tatsächliche Geschwindigkeit des Rades, nämlich $v_{ist}$ berechnet.

An jedem Schwenkmotor 3 ist jeweils ein Vorsteuergerät 7 angeordnet. Jedes Vorsteuergerät 7 ist dabei als Elektromotor ausgebildet. Diese Elektromotoren verstellen die Schwenkmotoren derart, dass sie in ihren Extremstellungen entweder als Motor oder als Pumpe wirken, abhängig vom auf den beiden Seiten vorliegenden Drücken, also vom Differenzdruck. In einer Neutralstellung oder Nullstellung, bieten sie dem in den Leitungen 6 geförderten Übertragungsmedium keinen Widerstand.

Die Vorsteuergeräte 7 stehen mit einem weiteren, als Koordinator agierenden Steuergerät 8 in Verbindung.

An den Rädern 1 greift auch eine Fremdkraftbremse gegebenenfalls an, um die Räder 1 gegebenenfalls abzubremsen.

Wird das Fahrzeug 2 beschleunigt oder gebremst, so wird für einen kurzen Augenblick abwechselnd an den hinteren Rädern jeweils einer der beiden Schwenkmotoren 3 auf Null geschwenkt, so dass er den Übertragungsmedien für einen kurzen Zeitraum keinen Widerstand bietet. In diesem kurzen Zeitraum wird dann die Radreferenzdrehzahl über die an den hinteren Rädern angebrachten Drehzahlsensoren 4 ermittelt. Die Radreferenzdrehzahl, wird dabei dann von dem jeweiligen Raddrehzahlsensor 4 ermittelt, wenn der jeweilige Schwenkmotor 3 auf Null geschwenkt ist, also weder als Motor noch als Pumpe wirkt.

Während des Schwenkens auf Null, gegen Ende des Schwenkvorganges, wird das Hinterrad kurz beschleunigt, um die trägheitsbedingten Effekte am Rad auszugleichen, so dass das Rad schneller wieder frei auf dem Untergrund abrollt.

Dieses Verfahren wird sowohl beim Abbremsen, als auch beim Beschleunigen durchgeführt, wodurch während des gesamten Betriebes des Fahrzeuges verlässliche Werte für die Radreferenzdrehzahl ermittelt werden. Sollte die Beschleunigung des Rades beim Schwenkmotor 3 auf Null zu groß sein, so wird über eine Fremdkraftbremse 9 das jeweilige Rad 1 abgebremst. Die Hinterräder sind in Figur 1 auf der rechten Seite dargestellt, wohingegen die Vorderräder auf der linken Seite dargestellt sind.

Die Fremdkraftbremsen 9 können auch bei anderen Situationen und Fahrgelegenheiten zugeschaltet werden, um besonders starke Bremskräfte zu übertragen und besonders schnell das Fahrzeug 2 abzubremsen.

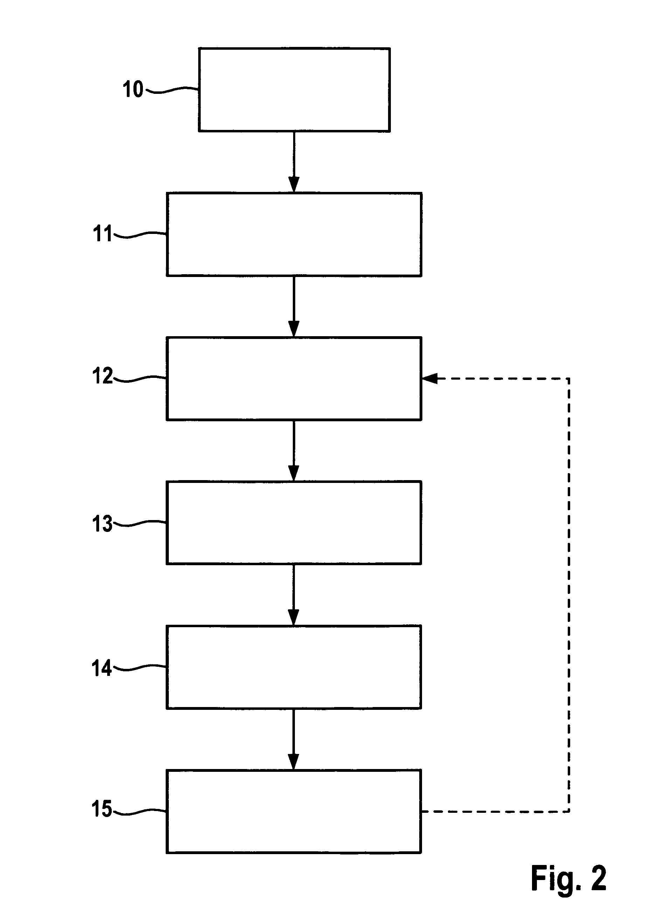

Figur 2 stellt den Ablauf des erfindungsgemäßen Verfahrens dar.

Dabei wird in einem ersten Schritt 10 ein Beschleunigen oder Abbremsen des Fahrzeuges durchgeführt und/oder registriert.

In einem nachfolgenden zweiten Schritt 11 wird der Schwenkmotor 3, der mit dem rechten Hinterrad in Verbindung steht, auf Null geschwenkt, so dass er dem Durchfluss an Übertragungsmedium durch ihn keinen Widerstand bietet. Das rechte Hinterrad läuft dann wieder frei und rollt normal ab.

Im nachfolgenden Schritt 12, findet dann die Erfassung der Radreferenzdrehzahl mittels des am rechten Hinterrad nahe angeordneten Raddrehzahlsensors 4 statt. Der Wert wird dann an eine Recheneinheit weitergegeben, was gestrichelt dargestellt ist, oder gespeichert, oder beides.

Nach dem Schritt 12 wird in einem Schritt 13 der andere im hinteren Bereich angeordnete Schwenkmotor 3, also der Schwenkmotor 3, der mit dem hinteren linken Rad in Verbindung steht, auf Null geschwenkt, wohingegen der Schwenkmotor des hinteren rechten Rades wieder entweder in einen Pump- oder einen Motorbetrieb, abhängig davon, ob das Fahrzeug abgebremst oder beschleunigt wird, geschalten wird. Die Radreferenzdrehzahl wird nun mittels des in der Nähe des hinteren linken Rades angebrachten Raddrehzahlsensors 4 gemessen. Das rechte Aggregat sollte entweder im Pump- oder Motorbetrieb befindlich sein, bevor das andere Aggregat auf Null geschwenkt wird.

Der dann gemessene Wert wird an die Recheneinheit weitergegeben, und von dieser zusammen mit dem bereits vorher gespeicherten oder schon übermittelten Radreferenzdrehzahlwert für das hintere rechte Rad verarbeitet.

Als Ausgabewert nach dem Schritt 15 wird ein solcher Wert entsprechend dann für nachfolgende Anwendungen weiter verwendet.

**Patentansprüche**

1. Verfahren zum Ermitteln einer Radreferenzdrehzahl eines Rades (1), eines Fahrzeuges (2) mit einem ein Übertragungsmedium nutzenden hydrostatischen Antrieb, wobei der hydrostatische Antrieb zumindest auf das eine Rad (1) wirkt, wobei der hydrostatische Antrieb einen, in einen Pumpbetrieb verschwenkbaren Schwenkmotor (3) aufweist, mit dem ein Drehmoment auf das Rad (1) aufbringbar ist, und wobei ein Raddrehzahlsensor (4) zur Erfassung der jeweiligen Raddrehzahl radnah angeordnet ist, **dadurch kennzeichnet, dass** während der Raddrehzahlsensor (4) die Radreferenzdrehzahl ermittelt, der Schwenkmotor (3) zum Ermöglichen eines widerstandsfreien Durchfluss des Übertragungsmediums durch den Schwenkmotor (3) hindurch entsprechend verstellt wird.

2. Verfahren nach Anspruch 1, wobei der Schwenkmotor (3), bereits bevor der Raddrehzahlsensor (4) die Radreferenzdrehzahl ermittelt, so verstellt wird, dass der Durchfluss an Übertragungsmedium widerstandsfrei durch diesen Schwenkmotor (3) hindurch erfolgt.

3. Verfahren nach einem der Ansprüche 1 oder 2, wobei zumindest jeweils zwei Vorderräder und zwei Hinterräder über jeweils einen Schwenkmotor (3) hydrostatisch angetrieben werden und die auf die Hinterräder und/oder Vorderräder einwirkenden Schwenkmotoren (3) zum Ermöglichen eines widerstandsfreien Durchflusses des Übertragungsmediums durch den jeweiligen Schwenkmotor (3) hindurch während des Ermittelns der Radreferenzdrehzahl verstellt werden.

4. Verfahren nach Anspruch 3, wobei an den auf die Hinterräder einwirkenden Schwenkmotoren (3) abwechselnd der Durchfluss an Übertragungsmedium durch diese widerstandsfrei gestaltet wird und dabei jeweils abwechselnd die jeweilige Radreferenzdrehzahl erfasst wird.

5. Verfahren nach einem der Ansprüche 1 bis 4, wobei beim Verstellen des Schwenkmotors (3) zum Ermöglichen eines widerstandsfreien Durchflusses an Übertragungsmedium durch den Schwenkmotor (3) hindurch, die Drehzahl des mit diesem Schwenkmotor (3) in Wirkzusammenhang stehenden Rades (1) erhöht wird.

**6.** Verfahren nach Anspruch 5, wobei eine Fremdkraftbremse (9) aktiv das beim Verstellen des mit dem im Wirkzusammenhang stehenden Schwenkmotors (3) beschleunigte Rad (1) abbremst.

**7.** Verfahren nach einem der Ansprüche 1 bis 6, wobei der Schwenkmotor (3) über jeweils ein Vorsteuergerät (7) verstellt wird, das vorzugsweise als ein Elektromotor ausgestaltet ist.

**8.** Verfahren nach einem der Ansprüche 1 bis 7, wobei der Betriebsdruck über eine Hauptpumpe (5), die vorzugsweise mit einem Verbrennungsmotor verbunden ist, zur Verfügung gestellt wird.

**9.** Verfahren nach Anspruch 7 oder 8, wobei ein Steuergerät (8) auf die Vorsteuergeräte (7) der Schwenkmotoren (3) und ein Vorsteuergerät der Hauptpumpe steuernd oder regelnd zugreift.

**10.** Vorrichtung enthaltend Mittel die zum Durchführen des Verfahrens nach einem der Ansprüche 1 bis 9 ausgestaltet sind, wie einem Hydraulikantriebssteuergerät.

**Claims**

**1.** Method for determining a wheel reference speed of a wheel (1) on a vehicle (2) having a hydrostatic drive which uses a transmission medium, wherein the hydrostatic drive acts at least on the one wheel (1), wherein the hydrostatic drive has a slewing motor (3) which can pivot into a pumping mode and with which a torque can be applied to the wheel (1), and wherein a wheel rotational speed sensor (4) is arranged near to the wheel in order to detect the respective wheel rotational speed, **characterized in that** while the wheel rotational speed sensor (4) determines the wheel reference speed, the slewing motor (3) is correspondingly adjusted in order to permit a resistance-free flow of the transmission medium through the slewing motor (3).

**2.** Method according to Claim 1, wherein the slewing motor (3) is already adjusted before the wheel rotational speed sensor (4) determines the wheel reference speed, in such a way that the flow of transmission medium through this slewing motor (3) takes place in a resistance-free fashion.

**3.** Method according to one of Claims 1 and 2, wherein in each case at least two front wheels and two rear wheels are driven hydrostatically via in each case one slewing motor (3), and the slewing motors (3) which act on the rear wheels and/or front wheels are adjusted during the determination of the wheel reference speed in order to permit a resistance-free flow of the transmission medium through the respective slewing motor (3).

**4.** Method according to Claim 3, wherein, at the slewing motors (3) which act on the rear wheels, the flow of transmission medium through said slewing motors (3) is alternately configured to be resistance-free and at the same time the respective wheel reference speed is alternately detected in each case.

**5.** Method according to one of Claims 1 to 4, wherein during the adjustment of the slewing motor (3) in order to permit a resistance-free flow of transmission medium through the slewing motor (3), the rotational speed of the wheel (1) which is in an operative relationship with said slewing motor (3) is increased.

**6.** Method according to Claim 5, wherein an extraneous force brake (9) actively brakes the wheel (1) which is accelerated during the adjustment of the slewing motor (3) which is in an operative relationship with the wheel (1).

**7.** Method according to one of Claims 1 to 6, wherein the slewing motor (3) is adjusted by means of, in each case, one pilot-control device (7) which is preferably configured as an electric motor.

**8.** Method according to one of Claims 1 to 7, wherein the operating pressure is made available by means of a main pump (5) which is preferably connected to an internal combustion engine.

**9.** Method according to Claim 7 or 8, wherein a control device (8) intervenes in the pilot-control devices (7) of the slewing motors (3) and in a pilot-control device of the main pump in an open-loop or closed-loop controlling fashion.

**10.** Device containing means which are configured to carry out the method according to one of Claims 1 to 9, such as a hydraulic drive control device.

**Revendications**

**1.** Procédé pour déterminer une vitesse de référence de roue d'une roue (1) d'un véhicule (2), comprenant un entraînement hydrostatique utilisant un fluide de transfert, l'entraînement hydrostatique agissant au moins sur ladite une roue (1), l'entraînement hydrostatique présentant un moteur pivotant (3) pouvant pivoter dans un mode de fonctionnement de pompe, avec lequel un couple peut être appliqué sur la roue (1), et un capteur de vitesse de rotation de roue (4) étant prévu à proximité de la roue pour détecter la vitesse de rotation respective de la roue, **caractérisé en ce que** pendant que le capteur de vitesse de rotation de roue (4) détecte la vitesse de rotation de référence de roue, le moteur pivotant (3) est déplacé de manière correspondante pour permettre un débit sans résistance du fluide de transfert à travers le moteur pivotant (3).

2. Procédé selon la revendication 1, dans lequel le moteur pivotant (3), déjà avant la détection par le capteur de vitesse de rotation de roue (4) de la vitesse de rotation de référence de roue, est déplacé de telle sorte que le débit de fluide de transfert à travers ce moteur pivotant (3) se produise sans résistance.

3. Procédé selon l'une quelconque des revendications 1 ou 2, dans lequel au moins à chaque fois deux roues avant et deux roues arrière sont entraînées de manière hydrostatique à chaque fois par un moteur pivotant (3) et les moteurs pivotants (3) agissant sur les roues arrière et/ou sur les roues avant pour permettre un débit sans résistance du milieu de transfert à travers le moteur pivotant (3) respectif étant déplacés pendant la détection de la vitesse de rotation de référence de roue.

4. Procédé selon la revendication 3, dans lequel le débit de fluide de transfert à travers les moteurs pivotants (3) est conçu sans résistance en alternance au niveau desdits moteurs pivotants agissant sur les roues arrière et en l'occurrence à chaque fois la vitesse de rotation de référence de roue respective est détectée en alternance.

5. Procédé selon l'une quelconque des revendications 1 à 4, dans lequel, lors du réglage du moteur pivotant (3) pour permettre un débit sans résistance de fluide de transfert à travers le moteur pivotant (3), la vitesse de rotation de la roue (1) en liaison fonctionnelle avec ce moteur pivotant (3) est augmentée.

6. Procédé selon la revendication 5, dans lequel un servofrein (9) freine activement la roue (1) accélérée lors du réglage du moteur pivotant (3) en liaison fonctionnelle avec la roue (1).

7. Procédé selon l'une quelconque des revendications 1 à 6, dans lequel le moteur pivotant (3) est réglé chaque fois par un appareil pilote (7) qui est configuré de préférence sous forme de moteur électrique.

8. Procédé selon l'une quelconque des revendications 1 à 7, dans lequel la pression de fonctionnement est fournie par le biais d'une pompe principale (5), qui est de préférence reliée à un moteur à combustion interne.

9. Procédé selon l'une quelconque des revendications 7 ou 8, dans lequel un appareil de commande (8) intervient par commande ou régulation sur les appareils pilotes (7) des moteurs pivotants (3) et sur un appareil pilote de la pompe principale.

10. Dispositif contenant des moyens qui sont configurés pour mettre en oeuvre le procédé selon l'une quelconque des revendications 1 à 9, tels qu'un appareil de commande d'entraînement hydraulique.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19918882 A1